# FASCICULE DE BREVET EUROPEEN

(11) **EP 2 552 671 B1**
(45) Date de publication et mention de la délivrance du brevet: **14.05.2014**
(21) Numéro de dépôt: 11730342.0
(22) Date de dépôt: 28.03.2011
(51) Int. Cl.: B29C 51/10, B29C 51/16, B29C 51/28, B29C 63/04, B29L 31/52, B32B 37/10, B32B 3/04

(54) **PROCÉDÉ DE REVÊTEMENT PAR THERMOFORMAGE D'UN NOYAU DE FORME QUELCONQUE, MACHINE AUTOMATIQUE DESTINÉE À SA MISE EN OEUVRE ET PRODUIT FINI OBTENU PAR UN TEL PROCÉDÉ**
VERFAHREN ZUR BESCHICHTUNG EINES KERNS EINER BELIEBIGEN FORM MITTELS WÄRMEFORMEN, AUTOMATISCHE MASCHINE ZUR UMSETZUNG DES VERFAHRENS UND ANHAND DIESES VERFAHRENS GEWONNENES ENDPRODUKT
METHOD FOR COATING A CORE OF AN ARBITRARY SHAPE BY THERMOFORMING, AUTOMATIC MACHINE FOR THE IMPLEMENTATION THEREOF AND FINISHED PRODUCT OBTAINED BY SUCH A METHOD

(30) Priorité: 26.03.2010 FR 1001231
(43) Date de publication de la demande: 06.02.2013
(73) Titulaire: Newtis, 40480 Vieux Boucau (FR)
(72) Inventeur: VERGNE, Pascal, 40480 Vieux Boucau (FR); CAZADIEU, Pierre, 40140 Soustons (FR)
(74) Mandataire: Nony
(86) Numéro de dépôt international: PCT/FR2011/000186
(87) Numéro de publication internationale: WO 2011/117487

(56) Documents cités:
- EP-A1- 1 106 331
- EP-A2- 0 262 748
- DE-A1- 10 254 957
- FR-A1- 2 674 170
- FR-A1- 2 738 769
- US-A- 5 728 246
- US-A1- 2008 146 102

## Description

L'invention se rapporte au domaine de la fabrication de produits finis sur la base d'un noyau de forme quelconque que l'on souhaite protéger et finir par une couche de revêtement en matériau polymère en vue de renfort et/ou de protection et/ou de décoration, et ce par un procédé de thermoformage automatique. L'invention s'applique particulièrement à des produits de sports et loisirs, type flotteur pour sports nautiques, mais également à des éléments de décoration, à du mobilier ou à d'autres produits d'agencement, de type présentoirs sur lieux de vente ou autres.

Classiquement, pour la finition de produits de forme quelconque, il existe de nombreux procédés de revêtement utilisant des matériaux polymères.

Dans le domaine particulier des planches de surf, le procédé le plus ancien, traditionnel, est un procédé manuel : l'élément flotteur à la forme souhaitée définie par un noyau, fini par ponçage manuel, est revêtu d'une enveloppe en fibres de verre imprégnées de résine polyester ou «epoxy» qui forme une coque externe de renfort et donne au flotteur sa forme finale. Une couche de résine pure paraffinée et un ponçage donne au flotteur son aspect final. Cette méthode traditionnelle est entièrement manuelle et artisanale.

Les inconvénients d'une telle technique sont que les produits utilisés sont nocifs et affectent les conditions de travail, que le temps de mise en oeuvre est très long, qu'il nécessite une qualification particulière des opérateurs, et qu'au final la coque extérieure est très fragile à l'impact. De plus les possibilités de décoration sont limitées.

Des procédés industriels ont donc été développés pour construire la coque externe d'un flotteur, soit par roto moulage et injection de la mousse à l'intérieur de la coque ainsi formée, soit par empilage de différentes couches dans un moule et mise en forme sous presse en utilisant soit le chauffage, soit la mise sous vide, soit une combinaison de ces techniques.

Les inconvénients de ces techniques industrielles sont d'abord qu'elles nécessitent l'utilisation de moules et ne permettent pas de personnaliser la forme du flotteur, la forme de la coque externe dépendant exclusivement de la forme du moule. De plus, toutes les planches fabriquées en moule ont toujours un plan de joint qui se situe au centre du chant de la planche : pour des raisons pratiques de démoulage, il est en effet impossible de positionner le plan de joint à un autre endroit. C'est le cas par exemple d'une planche telle que décrite dans la demande de brevet US2008/0146102.

Ainsi, pour un flotteur, le plan de joint se situe toujours sur le contour de la planche et au milieu du chant qui est justement la zone la plus exposée aux chocs, et la jonction du revêtement à cet endroit rend les planches fragiles. De plus, le chant de la planche est une zone de glisse importante. Positionner le joint à cet endroit vient perturber l'écoulement sur le flotteur dans l'eau. Enfin, le plan de joint au centre du chant de la planche n'est pas esthétique et est peu apprécié des pratiquants. Certains fabricants sont obligés de le masquer.

En ce qui concerne les équipements, les procédés de thermoformage automatiques les plus classiques utilisés pour reproduire des pièces plastiques identiques qui utilisent des moules (capot moteur, présentoir sur des lieux de vente, pièces d'électroménager, emballages alimentaires etc) peuvent étre mis en oeuvre à l'aide de machines de thermoformage en vente sur le marché. Les presses à membrane, aujourd'hui permettent la mise en forme de placage et d'encollage de pièces de tout type, mais sans la possibilité de venir en contre dépouille.

Pour des formes quelconques mais formées à partir de noyaux à faces principales planes telle que par exemple celles décrite dans le brevet US 5728246, des dispositions particulières ont été prises pour le recouvrement des chants qui peuvent être soit convexes soit concaves : l'enseignement principal est qu'il est indispensable de limiter le dépassement de la feuille qui va recouvrir le chant, notamment pour éviter les plis : il n'est jamais prévu de venir en contre dépouille sur la face opposée à la face couverte au principal par une feuille de matériau polymère.

La demande de brevet FR 2674170 décrit un procédé de réalisation d'un panneau par placage d'une plaque en copeaux de bois aggloméré, au moyen d'une feuille de papier recouvert d'un film protecteur de mélanine dur et transparent, le placage étant effectué à températures élévées et sous fortes pressions. La machine de placage utilisée est connue et comprend deux parois articulées qui sont actionnées par pivotement autour de la plaque, pour appliquer sous pression le revêtement de placage contre les bords longitudinaux de la plaque pendant un temps suffisant pour le durcissement à chaud d'un adhésif interposé entre le placage et les deux bords.

La demande de brevet DE10254957 décrit, pour la réalisation d'éléments de mobilier ou de d'équipement intérieur, un procédé de réalisation de panneau formé sous presse à vide où une première face est entièrement recouverte d'un placage, puis la deuxième face et le chant sont recouverts par une deuxième feuille, de sorte que la finition soit facilitée, mais la ligne de joint de finition est exactement dans l'angle formé par la première face et le chant, ce que l'invention cherche à éviter.

L'invention concerne un procédé automatisable et donc industriel pour revêtir un noyau préformé et former ainsi une coque externe de renfort par thermoformage, placage et encollage de feuilles polymères, applicable sur n'importe quelle forme ou noyau, le thermoformage étant effectué directement sur la pièce sans utilisation de moule.

Le procédé de revêtement mis en oeuvre permet aussi de venir envelopper la pièce en contre dépouille, évitant ainsi un plan de joint dans le chant car le plan de joint peut être placé comme souhaité à différents endroits, et en particulier sur la partie supérieure de la planche, ce qui évite toute perturbation de la glisse sur l'eau du flotteur.

Enfin le procédé, s'il est industrialisé, permet un gain de temps en production tout en conservant la possibilité de faire des formes personnalisables.

Comme il sera décrit plus en détails ci-après, le procédé selon l'invention permet l'utilisation de matériaux plus résistants aux chocs et aux impacts. Il permet également l'impression numérique assurant une qualité de rendu graphique pour la décoration. Les matériaux, et le procédé qui les met en oeuvre, sont également moins nocifs pour les opérateurs et l'environnement.

Selon l'invention, un procédé de revêtement d'un noyau préformé ayant deux faces et un chant sur le pourtour de ce noyau faisant le lien entre ces deux faces, par thermoformage d'un matériau polymère, le revêtement étant réalisé par chauffage, encollage et placage sous vide de deux feuilles de matériau polymère appliquées successivement sur les deux faces du noyau pour recouvrir complètement le noyau, est caractérisé en ce que :
- dans une étape, l'une au moins des deux feuilles de matériau polymère dite première feuille, de surface adaptée au recouvrement d'une face complète du noyau, dite première face, du chant du noyau et d'une partie de l'autre face du noyau, dite deuxième face, est encollée puis plaquée sous vide sur cette première face, sur le chant et sur la deuxième face du noyau par des moyens permettant de venir en contre-dépouille sur le chant et sur cette deuxième face,
- dans une autre étape, l'autre feuille de matériau polymère, dite seconde feuille, de surface au minimum complémentaire de celle de la première feuille pour recouvrir au minimum la partie de la deuxième face non recouvrable par la première feuille, est encollée puis plaquée sous vide,
l'ordre de ces deux d'encollage et de placage des deux feuilles de matériau polymère étant quelconque,.
et une étape finale de finition pour obtenir une ligne de joint en dehors du champ, sur l'une des deux faces..

Dans un premier mode de réalisation, le procédé est en outre caractérisé en ce que la surface de la seconde feuille de matériau polymère est complémentaire de celle de la première feuille pour le recouvrement complet du noyau, une ligne de joint étant formée à la jonction entre ces deux feuilles lors de l'étape finale.

L'invention a également pour objet un tel procédé de revêtement caractérisé en ce que, pour un noyau destiné à un flotteur pour sports de glisse sur l'eau, la face du noyau dite première face est la face destinée à glisser sur l'eau, de sorte que le joint entre ces deux feuilles soit réalisé, dans l'étape finale du procédé, sur la deuxième face, sur le dessus du flotteur.

Dans un autre mode de réalisation, le procédé est caractérisé en ce que la deuxième feuille de matériau polymère a une surface adaptée au moins au recouvrement complet de la deuxième face et du chant, et qu'elle est encollée puis plaquée sous vide sur cette deuxième face et sur le chant par des moyens permettant de venir en contre dépouille sur le chant, le chant étant ainsi recouvert par les deux feuilles de matériau polymère et le joint étant formé par recouvrement des deux feuilles de polymère.

Selon l'invention, le procédé peut être réalisé soit manuellement, soit automatiquement.

L'invention concerne également un machine automatique destinée à la mise oeuvre de ce procédé et tout produit fini obtenu par un tel procédé.

Selon un mode de réalisation de l'invention, une telle machine automatique pour la mise en oeuvre du procédé est caractérisée en ce qu'elle comporte un support destiné à recevoir le noyau posé sur une de ses deux faces, le support étant en retrait par rapport au chant" un châssis et un système de chauffage associé, un système de déplacement pour amener le châssis destiné à maintenir une feuille de polymère dans l'espace de chauffe du système de chauffage puis l'éloigner et déposer cette feuille encollée et chaude sur l'autre face du noyau par drapage sur le noyau en la libérant de son cadre de maintien, la machine comportant en outre une membrane élastique bridée pour englober l'ensemble noyau et feuille polymère via un cadre qui assure l'étanchéité, et une pompe à vide pour évacuer l'air entre l'ensemble et la membrane permettant ainsi, de plaquer et de maintenir la feuille contre le noyau.

Selon un autre mode de réalisation de l'invention, une telle machine automatique pour la mise en oeuvre du procédé est caractérisée en ce qu'elle comporte un support destiné à recevoir le noyau posé sur une de ses deux faces, le support étant en retrait par rapport au chant, un châssis destiné à maintenir fixement une feuille de matériau polymère encollée, un système de chauffage associé, un système de déplacement pour amener le châssis destiné à maintenir la deuxième feuille dans l'espace de chauffe du système de chauffage puis l'éloigner et déposer cette feuille encollée et chaude sur l'autre face du noyau, la feuille chaude étant alors déposée par drapage sur le noyau pendant la machine comportant en outre une baudruche gonflée pour venir en contact avec la feuille et appliquer une pression sur l'ensemble noyau et feuille chaude, et une pompe à vide pour évacuer l'air restant entre le noyau et la feuille, et ainsi étirer, plaquer et maintenir la feuille contre le noyau.

L'invention sera mieux comprise et d'autres caractéristiques apparaîtront à l'aide de la description détaillée qui suit en référence aux figures annexées.

Les figures 1, 2 et 3 représentent respectivement en vue de dessus, en vue de côté et en section, un flotteur de surf réalisé conformément à la technique traditionnelle (Art antérieur).

Les figures 4a, 4b, 4c, 4d, 4e et 4f représentent en coupe un flotteur de surf aux différentes étapes du procédé selon l'invention.

Les figures 5a, 5b, 5c, 5d, 5e, et 5f représentent schématiquement les différentes phases du procédé mis en oeuvre via une machine automatique, pour les étapes de collage, de placage sur la deuxième face et le revêtement du chant du noyau préformé, selon l'invention, avec une feuille de matériau polymère non bridée.

Les figures 6a, 6b, 6c, 6d, 6e, et 6f représentent schématiquement les différentes phases du procédé mis en oeuvre via une machine automatique pour les étapes de collage et de placage sur la deuxième face et la couverture du chant selon l'invention, avec une feuille de matériau polymère bridée.

Les figures 7a, 7b et 7c représentent schématiquement en coupe les produits finis résultant.

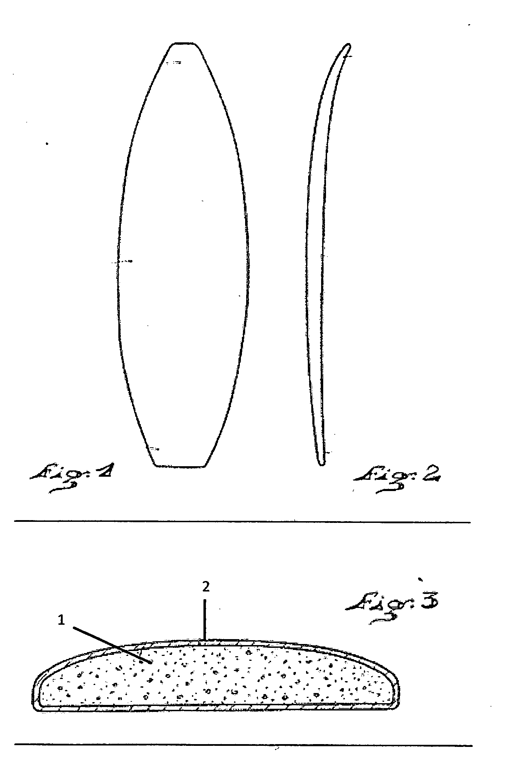

Les figures 1 et 2 représentent la forme traditionnelle d'un flotteur pour les sports d'eau respectivement selon une vue de dessus (cette vue est communément appelée « l'outline ») et une vue de côté (cette vue est communément appelée le « foil » et la « courbe de rocker »). De façon traditionnelle, comme le montre la figure 3 où le flotteur est représenté en section, le flotteur est réalisé à partir d'un pain de mousse, 1, formant un noyau préformé, recouvert d'une couche de fibres de verre enduite de résine 2.

Le pain de mousse est typiquement de la mousse de polyuréthane de densité 50 kg/m3 mais peut également être constitué de mousse de polystyrène expansée, extrudée. Le noyau peut également être de structure « sandwich », c'est-à-dire formé d'un assemblage de couches de natures différentes.

L'invention décrite ci-après peut s'appliquer pour tout type de noyau.

Le procédé selon l'invention pour l'enveloppement d'un noyau préformé ayant deux faces et un chant latéral reliant ces deux faces, consiste à thermoformer et plaquer un matériau polymère en feuilles ou bobines directement sur le flotteur. L'opération est faite en plusieurs phases dont l'une traite l'une des faces du flotteur et une autre qui traite l'autre face. Un plan de joint des deux parties est ensuite effectué pour assurer la solidité et l'étanchéité de l'ensemble selon une ligne choisie en dehors du chant latéral du noyau.

Les feuilles ou bobines de polymères utilisées pour ce thermoformage et ce placage ont une épaisseur typiquement comprise entre 0,5 et 2 mm. Elles peuvent être transparentes, teintées ou opaques.

Les matériaux polymères utilisables pour mettre en oeuvre ce procédé sont très divers: PVC (Polychlorure de vinyle) / PE (Polyéthylène) / PEHD (Polyéthylène haute densité) / PS choc (Polystyrène Choc) / ABS (Acrylonitrile Butadiène Styrène) / PET (Polyéthylène téréphtalate) / PETG (Polyéthylène téréphtalate Glycol) / PMMA choc (Polyméthacrylate de méthyle choc) / PC (Polycarbonate) / PA (Polyamides) / POM (Polyoxyméthylène) / PLA (Polyactide) et Bio polymères. Mais également toutes les combinaisons susceptibles d'être obtenues par extrusion (2 couches, 3 couches..), comme les combinaisons ABS/PU, les ABS/PC, PC/PMMA, peuvent également être utilisées, le choix étant déterminé par les caractéristiques mécaniques nécessaires à l'application envisagée, son prix, et ses qualités autres du type possibilité de coloration et/ou de décoration.

Les polymères chargés en fibres peuvent également être utilisés en particulier lorsque la couche plaquée doit avoir des qualités de renfort.

Les feuilles ou plaques pré- imprégnées de résine thermodurcissable ou de résine thermoplastique sont également compatibles avec le procédé selon l'invention.

Ce procédé peut être mis en oeuvre de façon manuelle mais il peut également être mis en oeuvre de façon automatique au moyen d'une machine automatique réalisant les différentes étapes.

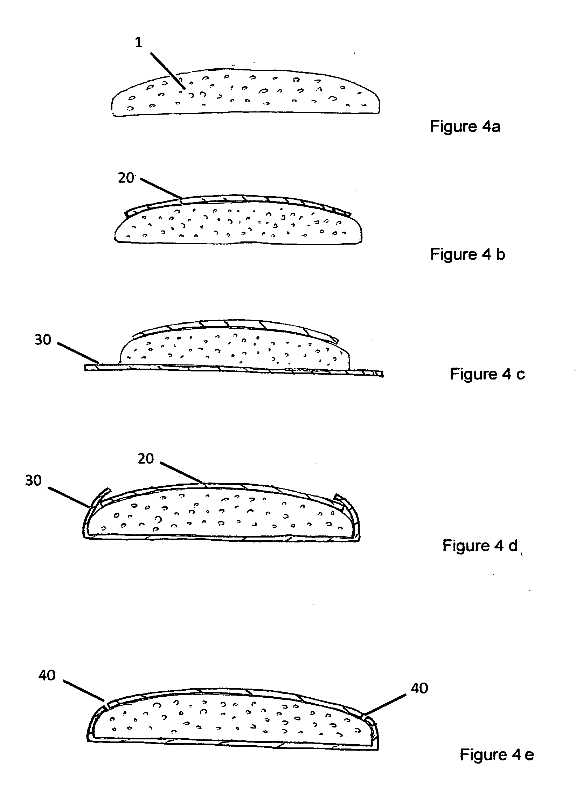

Les figures 4a à 4f représentent les différentes étapes du procédé :
Figure 4a : Etape préalable de mise en forme du noyau 1 en mousse polyuréthane.
Figure 4b : Etape 1 où est effectué un collage sous vide de la plaque supérieure20 préalablement découpée à la forme exacte du contour choisi pour cette plaque sur le dessus de la planche, en retrait par rapport au chant dans l'exemple représenté.
Figure 4c : Etape 2 de collage sous vide d'une plaque 30 découpée à la forme du contour du dessous avec un dépassement, ou off set, correspondant au rayon des chants pour pouvoir remonter sur le dessus de la planche et dépasser le contour de la plaque déposée sur la face supérieure.
Figure 4d : Etape 3 pendant laquelle ce pourtour de la plaque inférieure 30 est formé sur le chant et sur le dessus de la planche jusqu'à rejoindre la plaque supérieure 20.
Figure 4e : Etape 4 où une découpe des plaques dans leur zone de recouvrement et un ébavurage est réalisé pour obtenir un joint en bord à bord 40.

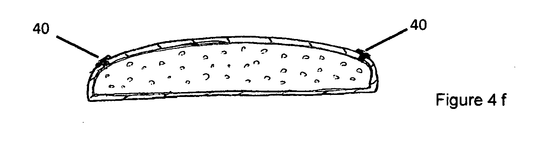

Figure 4f : Etape 5 où un profilé polymère est déposé et collé sur le plan de joint pour assurer l'étanchéité et la solidité de l'ensemble, le plan de joint 40 étant ainsi réalisé sur la face supérieure du noyau.

Les étapes 2 et 3 peuvent être inversées : dans ce cas, c'est la plaque 20 qui vient s'appuyer sur la plaque 30.

De même, la plaque la plus petite peut être placée sur la face inférieure du noyau.

Manuellement, l'étape 3 est réalisée simplement par chauffage local de la plaque dépassante au moyen d'un appareil thermique puis, par une pression appliquée par marouflage à l'aide d'un outillage spécifique à ce pourtour, cette plaque est appliquée sur le chant et sur le dessus.

Cette succession d'étapes peut être réalisée de manière automatique sans difficulté particulière sauf pour l'étape 3 de revêtement par la plaque 30, ou feuille, qui doit recouvrir les chants.

La mise en oeuvre automatique de cette étape, au moyen d'une machine spécialement construite à cet effet peut être effectuée, dans un premier mode de réalisation, en utilisant une feuille thermoplastique non bridée, de la manière suivante :

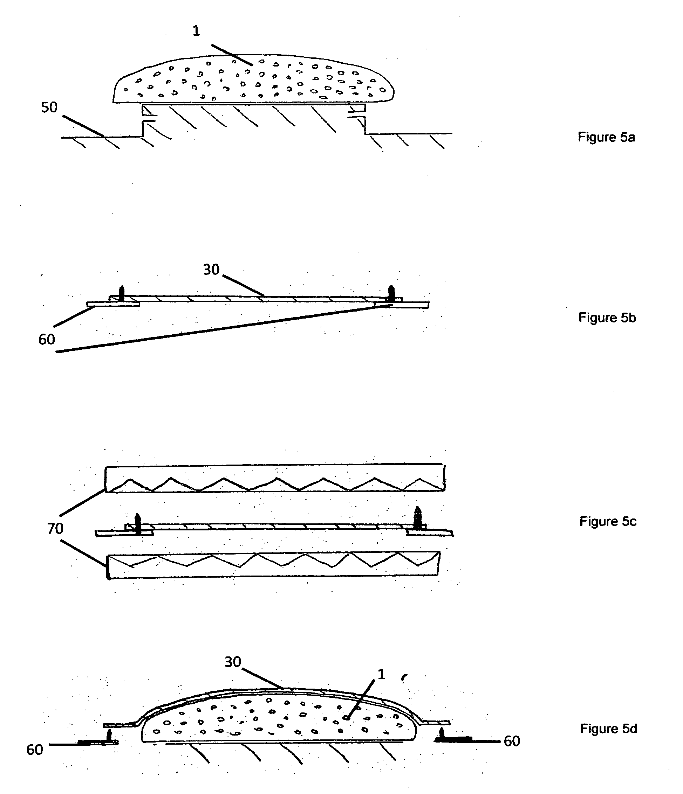

Figure 5a : le pain de mousse préformé, ou noyau, 1, est fixé sur un châssis spécifique, 50, adapté à la forme de ce noyau pour libérer le chant et le bord inférieur.
Figure 5b: la feuille thermoplastique préalablement encollée, 30, d'épaisseur prédéterminée adaptée, est positionnée sur un cadre, 60, duquel elle peut être libérée facilement.
Figure 5c : des panneaux de chauffe, 70, électriques de type infrarouge, céramique ou halogène, chauffent la feuille de part et d'autre jusqu'à la température de formage. Cette température de formage varie selon les types de matières et l'épaisseur des feuilles utilisées.
Figure 5d : après que la température optimum de thermoformage ait été atteinte, la feuille se ramollit. Les panneaux de chauffe, 70, sont automatiquement mis en retrait et la feuille de polymère 30 et le noyau 1 sont mis en contact. La feuille chaude est alors déposée par drapage sur le pain de mousse et se libère de son cadre de maintien, 60.

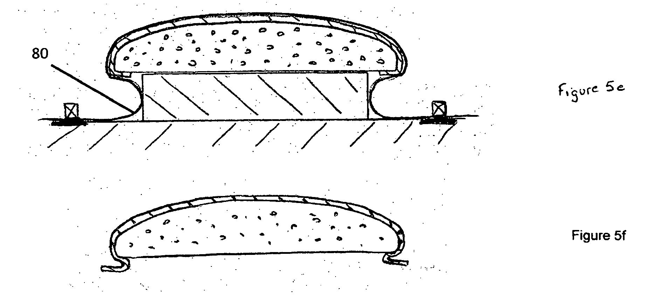

Figure 5e : un cadre contenant une membrane élastique bridée, 80, vient englober l'ensemble noyau 1 et feuille polymère 30. Ce cadre vient assurer l'étanchéité du système.
Une pompe à vide est alors employée pour évacuer l'air entre l'ensemble noyau 1 et feuille polymère 30 d'une part et la membrane 80 d'autre part, permettant ainsi de plaquer et de maintenir la feuille contre le noyau. L'élasticité de la membrane permet de venir plaquer la feuille en contre dépouille et d'envelopper la totalité du chant de la planche.
Figure 5f : l'ensemble est refroidi naturellement par exposition à l'air libre et/ou avec l'aide de ventilateurs. Lorsque que l'ensemble est suffisamment refroidi, il peut être retiré du plateau 50 sans déformation. Les pièces thermoformées peuvent alors être dirigées vers les ateliers de finition après que la feuille destinée à l'autre face ait été encollée et appliquée.

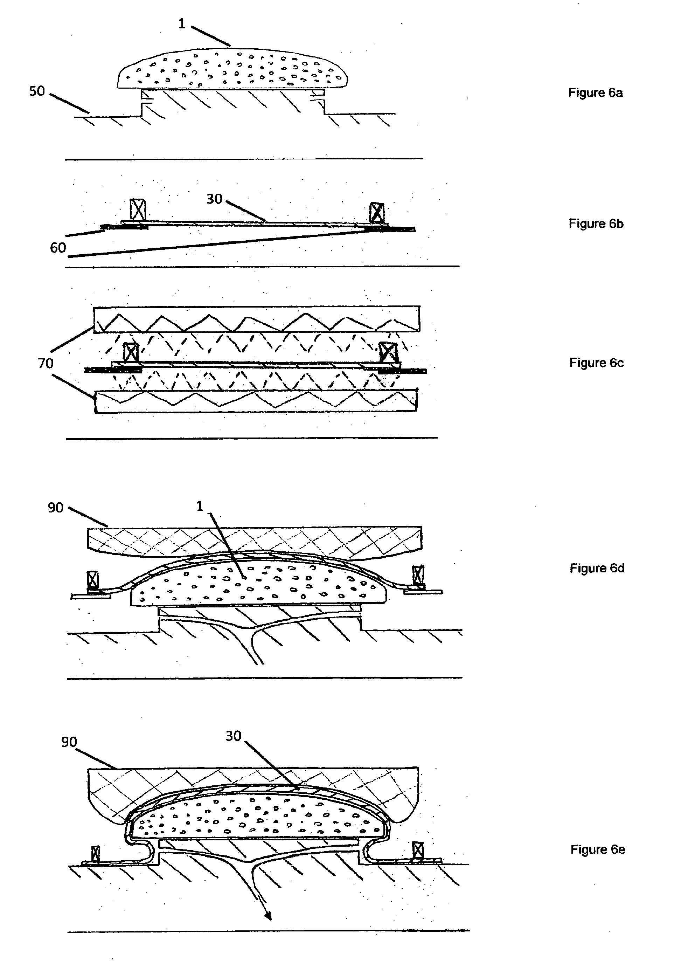

La mise en oeuvre automatique de l'étape 3 peut également être effectuée dans un second mode de réalisation en utilisant une feuille thermoplastique bridée, de la manière suivante représentée schématiquement aux figures 6a à 6f :
Figure 6a : le noyau est comme précédemment fixé sur châssis spécifique 50 à l'aide de ventouses mécaniques.
Figure 6b : la feuille thermoplastique 30 préalablement encollée, d'épaisseur choisie en fonction du matériau et des qualités souhaitées pour la couche de revêtement, est positionnée puis bridée, c'est-à-dire maintenue fermement sur un cadre 60 qui assure l'étanchéité avec le châssis qui accueille le pain de mousse.
Figure 6c: comme précédemment, des panneaux de chauffe 70, électriques de type infrarouge, céramique ou halogène chauffent la feuille de part et d'autre jusqu'à la température de formage. Cette température de formage, comme déjà indiqué, varie selon les matières et l'épaisseur des feuilles utilisées.
Figure 6d : après que la température optimum de thermoformage ait été atteinte, la feuille se ramollit. Comme précédemment, les panneaux de chauffe sont automatiquement mis en retrait et la feuille de polymère et le noyau sont mis en contact. La feuille chaude 30 est alors déposée par drapage sur le noyau. Au même moment, une baudruche gonflée, 90, vient en contact sur la feuille 30 et applique une pression sur l'ensemble noyau 1/ feuille chaude 30.
Figure 6e : une pompe à vide est utilisée pour évacuer l'air restant entre le noyau 1, et la feuille 30, permettant ainsi d'étirer, de plaquer et de maintenir la feuille contre le noyau.
L'étirement de la feuille permet à celle-ci de venir en contre dépouille et d'envelopper la totalité du chant de la planche. La baudruche est toujours maintenue en pression sur l'ensemble noyau / feuille de polymère.

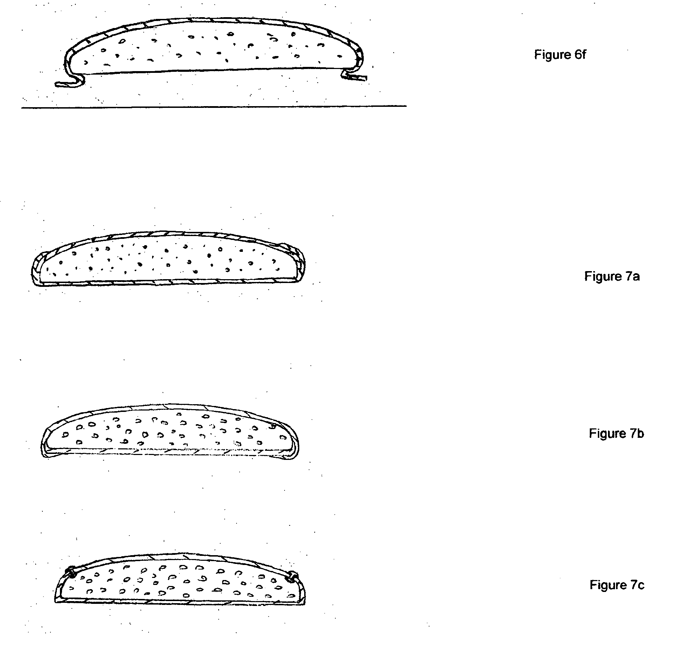

Figure 6f : l'ensemble est alors refroidi naturellement par exposition à l'air libre et/ou avec l'aide de ventilateurs. Lorsque l'ensemble est suffisamment refroidi, il peut être retiré du plateau sans déformation. Les pièces thermoformées peuvent alors être dirigées vers les ateliers de finition après que la feuille destinée à l'autre face ait été encollée et appliquée.

La méthode utilisée permet d'aller en contre dépouille et donc de placer le joint à l'endroit souhaité par simple recouvrement comme représenté sur la figure 7a où les deux surfaces viennent simplement en recouvrement sur la surface supérieure, ou sur la figure 7b où les deux surfaces viennent en recouvrement sur la surface inférieure.

Lorsque les deux feuilles de matériau polymère sont en recouvrement, chacune d'elle recouvrant complètement une face et étant appliquée sur le chant et éventuellement sur une partie de l'autre face, par le procédé selon l'invention qui permet de venir en contre dépouille, le double placage apporte rigidité, solidité et étanchéité au noyau, particulièrement dans la zone de chant.

Le procédé utilisé permet également comme représenté sur la figure 7c de réaliser l'étape de finition via un joint préformé en matériau polymère 40 qui vient finir l'étanchéité par collage en bord à bord entre les deux feuilles collées et plaquées.

Ce procédé est particulièrement bien adapté aux planches destinées aux sports de glisse sur l'eau (kitesurf, wakeboards, windsurf, sports board...) et plus particulièrement à la planche de surf aquatique.

Mais ce procédé peut être aussi appliqué dans le domaine du mobilier et de la décoration, particulièrement lorsque l'on souhaite disposer un plan ou une ligne de joint entre plaques ou feuilles de recouvrement d'un noyau ailleurs que sur des angles ou un chant, et/ou à des endroits déterminés pour ne pas induire de défauts dans le fonctionnement et/ou pour maintenir le joint invisible.

## Revendications

1. Procédé de revêtement d' un noyau (1) préformé ayant deux faces et un chant sur le pourtour de ce noyau faisant le lien entre ces deux faces, par thermoformage d'un matériau polymère, le revêtement étant réalisé par chauffage, encollage et placage sous vide de deux feuilles de matériau polymère (20, 30) appliquées successivement sur les deux faces du noyau pour recouvrir complètement le noyau (1),
dans une étape, l'une au moins des deux feuilles de matériau polymère, dite première feuille (30), de surface adaptée au recouvrement d'une face complète du noyau, dite première face, du chant du noyau et d'une partie de l'autre face du noyau, dite deuxième face, est encollée puis plaquée sous vide sur cette première face, sur le chant et sur la deuxième face du noyau par des moyens permettant de venir en contre-dépouille sur le chant et sur cette deuxième face,
**caractérisé en ce que**
dans une autre étape, l'autre feuille de matériau polymère, dite seconde feuille (20), de surface au minimum complémentaire de celle de la première feuille (30) pour recouvrir au minimum la partie de la deuxième face non recouvrable par la première feuille, est encollée puis plaquée sous vide,
l'ordre de ces deux phases d'encollage et de placage des deux feuilles de matériau polymère étant quelconque, et
une étape finale de finition pour obtenir une ligne de joint en dehors du chant, sur l'une des deux faces.

2. Procédé selon la revendication 1, **caractérisé en ce que** la surface de la seconde feuille de matériau polymère est complémentaire de celle de la première feuille pour le recouvrement complet du noyau, une ligne de joint étant formée à la jonction entre ces deux feuilles lors de l'étape finale.

3. Procédé de revêtement selon l'une des revendications 1 et 2, **caractérisé en ce que**, pour un noyau destiné à un flotteur pour sports de glisse sur l'eau, la face du noyau dite première face est la face destinée à glisser sur l'eau, de sorte que le joint entre ces deux feuilles soit réalisé, dans l'étape finale du procédé, sur la deuxième face, sur le dessus du flotteur.

4. Procédé selon la revendication 1, **caractérisé en ce que** la deuxième feuille de matériau polymère (20) a une surface adaptée au moins au recouvrement complet de la deuxième face et du chant, et qu'elle est encollée puis plaquée sous vide sur cette deuxième face et sur le chant par des moyens permettant de venir en contre dépouille sur le chant, le chant étant ainsi recouvert par les deux feuilles de matériau polymère et le joint étant formé par recouvrement des deux feuilles de polymère.

5. Procédé de revêtement selon l'une des revendications précédentes, **caractérisé en ce que** le procédé est mis en oeuvre manuellement, les feuilles polymères étant découpées selon les surfaces à coller avant encollage.

6. Procédé de revêtement selon l'une des revendications 1 et 2, **caractérisé en ce que** le procédé est mis en oeuvre par une machine automatique, les feuilles de matériau polymère étant encollées et plaquées, puis découpées selon la ligne de joint.

## Patentansprüche

1. Verfahren zur Beschichtung eines vorgeformten Kerns (1) mit zwei Seiten, wobei eine Kante auf dem Umfang dieses Kerns das Bindeglied zwischen diesen beiden Seiten darstellt, durch Wärmeformen eines Polymermaterials, wobei die Beschichtung durch Erhitzen, Kleben und Vakuumplattieren zweier Folien aus Polymermaterial (20, 30) erfolgt, die nacheinander auf die beiden Seiten des Kerns aufgebracht werden, um den Kern (1) vollständig zu bedecken,
wobei in einem Schritt mindestens eine der beiden Folien aus Polymermaterial, erste Folie (30) genannt, mit einer Fläche, die an das Abdecken einer vollständigen Seite des Kerns, erste Seite genannt, der Kante des Kerns und eines Teils der anderen Seite des Kerns, zweite Seite genannt,
angepasst ist, auf diese erste Seite auf die Kante und auf die zweite Seite des Kerns durch Mittel geklebt und dann unter Vakuum plattiert wird, die es ermöglichen, auf der Kante und auf dieser zweiten Seite in Hinterschnitt zu gelangen,
**dadurch gekennzeichnet, dass**:
in einem weiteren Schritt die andere Folie aus Polymermaterial, zweite Folie (20) genannt, mit einer Fläche, die zumindest zu jener der ersten Folie (30) komplementär ist, um zumindest den Teil der zweiten Seite zu bedecken, der von der ersten Folie nicht bedeckt werden kann, aufgeklebt und dann unter Vakuum aufplattiert wird,
wobei die Reihenfolge dieser beiden Klebe- und Plattierphasen der beiden Folien aus Polymermaterial beliebig ist, und
in einem finalen Schritt der Endbearbeitung eine Fugenlinie außerhalb der Kante auf einer der beiden Seiten erhalten wird.

2. Verfahren nach Anspruch 1, dadurch gekenntzeichnet, dass die Flache der zweiten Folie aus Polymermaterial zu jener der ersten Folie für die vollständige Abdeckung des Kerns komplementär ist, wobei eine Fugenlinie an der Verbindung zwischen diesen beiden Folien im finalen Schritt gebildet wird.

3. Beschichtungsverfahren nach einem der Ansprüche 1 und 2, **dadurch gekennzeichnet, dass** für einen Kern mit einem Schwimmer für Gleitsportarten auf dem Wasser die Seite des Kerns, die erste Seite genannt wird, die Seite ist, die dazu bestimmt ist, auf dem Wasser zu gleiten, so dass die Fuge zwischen diesen beiden Folien in dem finalen Schritt des Verfahrens auf der zweiten Seite auf der Oberseite des Schwimmers hergestellt wird.

4. Verfahren nach Anspruch 1, **dadurch gekennzeichnet, dass** die zweite Folie aus Polymermaterial (20) eine Fläche hat, die zumindest an die vollständige Abdeckung der zweiten Seite und der Kante angepasst ist, und dass sie auf diese zweite Seite und auf die Kante durch Mittel, die es ermöglichen, auf der Kante in Hinterschnitt zu gelangen, geklebt und dann unter Vakuum aufplattiert wird, wobei die Kante so mit den beiden Folien aus Polymermaterial abgedeckte wird und die Fuge durch Überlappung der beiden Polymerfolien gebildet wird.

5. Beschichtungsverfahren nach einem der vorhergehenden Ansprüche, **dadurch gekennzeichnet, dass** das Verfahren manuell eingesetzt wird, wobei die Polymerfolien entlang der zu verklebenden Flächen vor dem Kleben ausgeschnitten werden.

6. Beschichtungsverfahren nach einem der Ansprüche 1 und 2, **dadurch gekennzeichnet, dass** das Verfahren durch eine automatische Maschine eingesetzt wird, wobei die Folien aus Polymermaterial verklebt und plattiert und dann entlang der Fugenlinie ausgeschnitten werden.

## Claims

1. A method of coating a preformed core (1) having two faces and an edge on the perimeter of the core making the connection between these two faces, by thermoforming of a polymer material, the coating being produced by heating, coating with glue and applying in a vacuum two sheets (20, 30) of polymer material applied successively to the two faces of the core to cover the core completely,
in one step, at least one of the two polymer material sheets, referred to as the first sheet (30), with an area adapted to cover a complete face of the core, referred to as the first face, the edge of the core and part of the other face of the core, called the second face, is coated with glue and then applied to this first face, the edge and the second face of the core in a vacuum by means enabling undercutting of the edge and this second face,
**characterized in that**
in another step, the other polymer material sheet, referred to as the second sheet (20), having an area at the least complementary to that of the first sheet (30) to cover at least the part of the second face not coverable by the first sheet, is coated with glue and then applied in a vacuum,
the order of these two phases of coating with glue and applying two polymer material sheets being of no consequence, and
it includes a final finishing step to obtain a joint line outside the edge, on one of the two faces.

2. The method as claimed in claim 1, wherein the area of the second polymer material sheet is complementary to that of the first sheet to cover the core completely, a joint line being formed at the junction between these two sheets during the final step.

3. The coating method as claimed in claim 1 or claim 2, **characterized in that**, for a core adapted for a float for water skimming sports, the first face of the core is the face adapted to skim over the water, so that the joint between these two sheets is made, in the final step of the method, on the second face, on the top of the float.

4. The method as claimed in claim 1, **characterized in that** the second polymer material sheet (20) has an area adapted at least to cover completely the second face and the edge and is coated with glue and then applied to this second face and to the edge in a vacuum by means enabling undercutting of the edge, the edge thus being covered by the two sheets of polymer material and the joint being formed by overlapping of the two sheets of polymer material.

5. The coating method as claimed in any preceding claims, **characterized in that** the method is carried out manually, the polymer sheets being cut according to the areas to be glued before coating with glue.

6. The coating method as claimed in claim 1 or claim 2, **characterized in that** the method is carried out by an automatic machine, the sheets of polymer material being coated with glue, applied and then cut along the joint line.
